# EUROPÄISCHE PATENTSCHRIFT

(11) **EP 0 600 306 B1**
(45) Veröffentlichungstag und Bekanntmachung des Hinweises auf die Patenterteilung: **21.05.1997**
(21) Anmeldenummer: 93118545.8
(22) Anmeldetag: 18.11.1993
(51) Int. Cl.: B60G 11/26

(54) **Lenkhubvorrichtung**
Steered lifting device
Dispositif de levage orientable

(30) Priorität: 03.12.1992 DE 4240686
(43) Veröffentlichungstag der Anmeldung: 08.06.1994
(73) Patentinhaber: Thiele, Horst, 74196 Neuenstadt (DE)
(72) Erfinder: Thiele, Horst, 74196 Neuenstadt (DE)
(74) Vertreter: Clemens, Gerhard, Dr.-Ing.

(56) Entgegenhaltungen:
- DE-A- 2 406 610
- DE-A- 3 438 892
- DE-C- 3 743 203
- FR-A- 2 551 014
- GB-A- 2 056 381
- US-A- 3 741 581

## Beschreibung

### TECHNISCHES GEBIET

Die vorliegende Erfindung betrifft eine Lenkhubvorrichtung für eine als Zwei-Kreissystem ausgebildete hydraulische oder pneumatischeAchsausgleichsvorrichtung.

Derartige Lenkhubvorrichtungen werden in Transportvorrichtungen zum Transportieren sehr großer und/oder sehr schwerer Bauteile oder Anlagen eingesetzt. In der Regel befinden sich bei derartigen Transportvorrichtungen unterhalb einer Ladefläche eine Vielzahl derartiger Lenkhubvorrichtungen, mittels derer Radelemente zentral gelenkt werden können. Gleichzeitig muß in vielen Fällen mittels einer Achsausgleichsvorrichtung ein Zusammenspiel mit anderen Lenkhubvorrichtungen gewährleistet sein, damit Bodenunebenheiten ausgeglichen werden können, so daß keine Neigung der Ladefläche beim Überfahren der Unebenheit auftritt. Dabei wird angestrebt, die Lenkhubvorrichtung möglichst kompakt auszubilden, damit der Abstand der Ladefläche zur Bodenoberfläche möglichst gering ist.

### STAND DER TECHNIK

Eine bekannte Lenkhubvorrichtung überträgt die Lenkbewegung mittels einer mechanischen Übertragungsvorrichtung, die einen Schwenktrieb mit Königszapfen und Spurkranz aufweist, an den ein Kniehebel angeschlossen ist. An den Kniehebel wiederum ist ein Lenkhebel angeschlossen, der an der Radachse befestigt ist. Durch Betätigen des Schwenktriebes wird nun der Kniehebel, der einen relativ flachen Verlauf hat, und damit auch der Lenkhebel verschwenkt, was zu einer Verdrehung des Rades führt. Die Hubbewegung wird durch einen zwischen dem Spurkranz mit Königszapfen und dem Kniehebel angeschlossenen, im wesentlichen vertikal verlaufenden Hydraulikzylinder bewirkt. Diese aufwendige Bauart mit vielen einzelnen Bauteilen ist hinsichtlich der Montage sehr teuer. Des weiteren sind in regelmäßigen Abständen Wartungsarbeiten insbesondere in den Anschlußpunkten der Bauteile durchzuführen, um deren Funktion dauerhaft zu gewährleisten. Durch den Einsatz verschiedenster mechanischer Übertragungsbauteile entsteht beim Bewegungsvorgang ein relativ hoher Reibungsverlust, so daß der Wirkungsgrad einer derartigen Vorrichtung nicht optimal ist.

Eine weitere bekannte Lenkhubvorrichtung weist einen im wesentlichen vertikal angeordneten Hydraulikzylinder zum Heben und Senken des Rades auf. An diesen Hydraulikzylinder und an die Radachse des Rades sind Gelenkarme angeschlossen, auf die ein zweiter, im wesentlichen geneigt angeordneter, an der Ladefläche befestigter Hydraulikzylinder einwirkt, wobei durch die Längsbewegung seines Kolbens die Lenkung des Rades bewirkt wird. Durch die Lageveränderung der Hebel beim Hub- bzw. Senkvorgang ergibt es Differenzen im Lenkausschlag zwischen mehreren Lenkhubvorrichtungen mit Rädern, da die zweiten Hydraulikzylinder jeweils um denselben Betrag aus- bzw. einfahren, einzelne Räder jedoch ein unterschiedliches Niveau einnehmen. Dies hat einen erhöhten Reifenverschleiß zur Folge. Infolge der Schwenkbewegung der Gelenkarme führt auch der zweite Hydraulikzylinder Schwenkbewegungen durch, wodurch zur Versorgung des zweiten Hydraulikzylinders flexible Schläuche eingesetzt werden müssen. Neben einem erhöhten Montageaufwand und daraus folgend erhöhter Herstellkosten bedeutet dies auch eine erhöhte Anfälligkeit an Störungen, da zusätzliche Anschlußpunkte für die Schläuche geschaffen werden müssen. Auch ist die Bauhöhe einer derartigen Lenkhubvorrichtung relativ groß.

Aus der DE 34 38 892 A1 ist eine als Zweikreissystem ausgebildete hydraulische Achsausgleichsvorrichtung mit einem ersten außenliegenden Mantelrohr, einem druckdicht in das erste Mantelrohr eingesteckten und längsverschieblich gelagerten zweiten Mantelrohr, einer druckdicht in dem zweiten Mantelrohr vorhandenen längsverschieblich gelagerten Kolbeneinrichtung, einem von außen beaufschlagbaren ersten geschlossenen Kammersystem zur Steuerung der Relativverschiebung zwischen zweitem Mantelrohr und erstem Mantelrohr und einem von außen beaufschlagbaren zweiten geschlossenen Kammersystem zur Steuerung der Relativverschiebung zwischen Kolbeneinrichtung und zweitem Mantelrohr bekannt Diese bekannte Achsausgleichsvorrichtung zeichnet sich dadurch aus,
daß die zu einer Baueinheit zusammengefaßten Zylinder aus einer äußeren, in sich geschlossenen, von außen beaufschlagbaren ölgefüllten Kammer und einer von dieser unabhängig in sich geschlossenen, von außen beaufschlagbaren, ölgefüllten inneren Kammer bestehen, der die innere Kammer umschließende Innenzylinder in dem die äußere Kammer umschließenden Außenzylinder druckdicht verschiebbar ist, in den Innenzylinder ein Hohlkolben in die innere Kammer druckdicht eingeführt und darin verschiebbar ist, in die innere Kammer ferner eine Ölzuführung axial feststehend eingesteckt ist, deren Länge im wesentlichen dem Hub des Hohlkolbens entspricht, und der Innenzylinder an der Ölzuführung druckdicht gleitend verschiebbar ist.

Aus der DE 37 43 203 C2 ist eine Lenkhubvorrichtung bekannt, die folgende Merkmale aufweist:

Ein erstes außenliegendes Mantelrohr, ein in das erste Mantelrohr eingestecktes und längsverschieblich gelagertes zweites Mantelrohr, eine druckdicht in dem zweiten Mantelrohr vorhandene längsverschieblich gelagerte Kolbeneinrichtung, ein von außen beaufschlagbares erstes geschlossenes Kammersystem zur Steuerung der Relativverschiebung zwischen zweitem Mantelrohr und erstem Mantelrohr, ein von außen beaufschlagbares zweites geschlossenes Kammersystem zur Steuerung der Relativverschiebung zwischen Kolbeneinrichtung und zweitem Mantelrohr, eine in einem Endbereich der Kolbeneinrichtung gelagerte Torsionseinrichtung,die mit einer Wandung des zweiten Mantelrohrs in Eingriff steht, derart, daß eine Drehung der Torsionseinrichtung eine Drehung des zweiten Mantelrohrs bewirkt, zumindest eine Antriebseinrichtung, die zumindest bereichsweise auf die Torsionseinrichtung zum Drehen der Torsionseinrichtung einwirkt und eine an dem ersten Mantelrohr befestigte Deckeleinrichtung.

Diese Lenkhubvorrichtung kann nicht für eine als Zweikreissystem ausgebildete hydraulische oder pneumatische Ausgleichsvorrichtung eingesetzt werden.

### DARSTELLUNG DER ERFINDUNG

Der Erfindung liegt die Aufgabe zugrunde, eine gegenüber dem genannten Stand der Technik verbesserte Lenkhubvorrichtung anzugeben, die einen sehr kleinen Einbauraum benötigt, die einfach und präzise herstellbar ist, die praktisch wartungsfrei ist und die ein hohes Maß an Funktionalität gewährleistet. Des weiteres sollen die im Stand der Technik genannten Nachteile vermieden werden. Mit einem geringen Aufwand soll ein höchstmögliches Maß an Funktionsicherheit geboten werden und dabei eine wartungsfreundliche und wenig störanfällige Konstruktion erhalten werden. Schließlich soll die Lenkhubvorrichtung auch für höhere Fahrgeschwindigkeiten einsetzbar sein, wie bei der bekannten als Zweikreissystem ausgebildeten Achsausgleichsvorrichtung gemäß DE 34 38 892 A1.

Die erfindungsgemäße Lenkhubvorrichtung ist durch die Merkmale des Anspruchs 1 gegeben. Vorteilhafte Ausgestaltungen und Weiterbildungen sind Gegenstand der Unteransprüche.

Durch den Einbau der Torsionseinrichtung in den Endbereich der Kolbeneinrichtung läßt sich ein extrem kleiner Einbauraum verwirklichen. Die Drehung und damit die Lenkung der Räder läßt sich durch eine außerhalb des Mantelrohrs angeordnete Antriebseinrichtung bewerkstelligen, die zumindest bereichsweise auf die über das erste Mantelrohr überstehende erste Randausformung der Torsionseinrichtung einwirkt. Die Übertragung der Lenkbewegung von der Torsionseinrichtung zur Kolbeneinrichtung erfolgt über die zweite Randausformung des zweiten Mantelrohres. Dadurch werden die Teile zur Lenkübertragung praktisch frei von Biegemomenten gehalten. Da keine Gelenkstäbe vorhanden sind, die beim Lenkvorgang ihre Lage ändern, kann die Vorrichtung schlauchlos ausgebildet werden. Die an dem Mantelrohr befestigte Deckeleinrichtung, die die Torsionseinrichtung und/oder Antriebseinrichtung umgibt, bewirkt, daß alle bewegten Teile in dem Hydraulik- oder Pneumatikmedium schwimmen. Insbesondere bei Verwendung von Hydrauliköl werden diese Teile wartungslos, da keine zusätzlichen Anschlußpunkte gewartet werden müssen. Auch der Verschleiß dieser Bauteile ist sehr gering. Gleichzeitig stellt die erfindungsgemäße Lenkhubvorrichtung eine preisgünstige Konstruktion dar, da keine extra Lagerkonstruktion für die Auflagerkräfte und Lenkkräfte wie bei den bekannten Lenkvorrichtungen ausgebildet werden müssen. Der Anschluß der Lenkvorrichtung an die Lagerfläche erfolgt direkt über die Deckeleinrichtung. Darüber hinaus ist eine exakte Montage der einzelnen Bauteile möglich, da die Kolbeneinrichtung im ersten und zweiten Mantelrohr, die Torsionseinrichtung in der Kolbeneinrichtung und die Antriebseinrichtung in der Deckeleinrichtung geführt wird.

Eine vorteilhafte Ausgestaltung der erfindungsgemäßen Lenkhubvorrichtung zeichnet sich dadurch aus, daß die Kolbeneinrichtung zumindest eine erste Ausnehmung aufweist, in die ein entsprechend geformtes und an dem zweiten Mantelrohr längsverschieblich angeschlossenes erstes Koppelbauteil eingreift, das die Kopplung der Drehbewegung von dem zweiten Mantelrohr und der Kolbeneinrichtung bewirkt, und die Torsionseinrichtung zumindest eine Ausnehmung aufweist, in die ein entsprechend geformtes und an dem zweiten Mantelrohr längsverschieblich angeschlossenes zweites Koppelbauteil eingreift, das die Kopplung der Drehbewegung von dem zweiten Mantelrohr und der Torsionseinrichtung bewirkt. Die Koppelbauteile sind bevorzugt als Federelemente ausgebildet, die in einer an dem zweiten Mantelrohr ausgebildeten Nuten längsverschieblich geführt sind. Das Herstellen der Bauteile und das Montieren der Bauteile läßt sich bei dieser Ausführungsform besonders einfach gestalten. Bevorzugt sind entlang eines Kreises senkrecht zur Längsachse der Kolbeneinrichtung um 90 Grad versetzt angeordnete jeweils vier Federelemente vorhanden, die in einer besonders einfachen Ausführungsform als quaderförmige Bauteile ausgebildet sind.

Eine hinsichtlich des geforderten geringen Platzbedarfes besonders günstige Ausführungsform zeichnet sich dadurch aus, daß die über das erste Mantelrohr ragende erste Randausformung der Torsionseinrichtung und/oder die zweite Randausformung des zweiten Mantelsrohres durch einen angeformten Torus gebildet wird. Bevorzugt weist der jeweilige Torus einen L-förmigen Querschnitt mit einem ersten Schenkel und einem zweiten Schenkel auf, wobei der erste Schenkel im wesentlichen parallel in einer Ebene senkrecht zur Längsachse und der zweite Schenkel der ersten Randausformung im wesentlichen in einer Zylinderebene außerhalb des ersten Mantelrohres bzw. der zweite Schenkel der zweiten Randausformung zwischen Torsionseinrichtung und Kolbeneinrichtung angeordnet ist. Dadurch ist es möglich, die außerhalb des ersten Mantelrohrs angeordnete Antriebseinrichtung im wesentlichen unterhalb der freien Endkante des Mantelrohrs anzuordnen, wodurch eine geringe Bauhöhe erzielt werden kann. Eine zuverlässige und wenig störanfällige Ausgestaltung zeichnet sich dadurch aus, daß der zweite Schenkel der ersten Randausformung als Zahnkranz ausgebildet ist, in die zumindest eine als Zahnstange ausgebildete Antriebseinrichtung eingreift. Hinsichtlich der Wartungsfreiheit zeichnet sich eine bevorzugte Ausgestaltung dadurch aus, daß die Antriebseinrichtung bzw. Zahnstange in der Deckeleinrichtung gelagert ist. Das erste hydraulische oder pneumatische Kammersystem wird durch die Außenwandung der Torsionseinrichtung, der Innenwandung der Deckeleinrichtung, der Außenwandung des zweiten Mantelrohres und der Innenwandung des ersten Mantelrohres gebildet.

Der Antrieb der Antriebseinrichtung zum Lenken der Lenkhubvorrichtung kann als hydraulischer, pneumatischer oder mechanischer Antrieb ausgebildet sein. Eine bevorzugte hydraulische Lösung zeichnet sich dadurch aus, daß an beiden Endbereichen der Zahnstange jeweils eine abgeschlossene hydraulische oder pneumatische Kammer vorhanden ist, deren Medium jeweils an der Stirnseite der Zahnstange ansteht, und ein Steuersystem vorhanden ist, das über die Kammer die Verschiebebewegung der Zahnstange steuert. Bei dieser Ausgestaltung schwimmen alle beweglichen Teile in Hydrauliköl, wodurch diese Teile praktisch wartungslos werden.

In einer bevorzugten Ausgestaltung ist die Kolbeneinrichtung in dem die längsverschiebliche Torsionseinrichtung aufweisenden Endbereich als Rohrquerschnitt ausgebildet. Dies ermöglicht eine einfache Montage der Lenkhubvorrichtung.

Aus Gründen der Druckentlastung ist in einer bevorzugten Ausgestaltung der erste Schenkel der ersten Randausformung der Torosionseinrichtung außenbündig mit einer Außenseite der Torsionseinrichtung angeordnet, wodurch eine senkrecht zur Längsachse angeordnete Auflagerfläche gebildet wird, und die der Innenseite der Deckeleinrichtung zugewandte Auflagerfläche der Torsionseinrichtung weist eine spiralförmige Nut auf, in der sich beispielsweise Hydrauliköl befindet.

Das von dem ersten Kammersystem getrennte zweite Kammersystem wird durch die Innenwandung der zweiten Mantelrohres, die Außenwandung und die Innenwandung der Kolbeneinrichtung im wesentlichen gebildet. Innerhalb eines Achsausgleichssystems werden die ersten Kammersysteme und die zweiten Kammersysteme der jeweiligen Lenkhubvorrichtungen miteinander gekoppelt, so daß ein Zwangsausgleich stattfinden kann. Durch das Vorsehen eines Zylinderpaares, d. h. Einstecken des zweiten Mantelrohres in das erste Mantelrohr, wird erreicht, daß sich die Geschwindigkeit an den Dichtungen bei gleicher Hubgeschwindigkeit an der Kolbenvorrichtung halbiert, wodurch der Einsatzfall auch bei höherer Geschwindigkeit auf Normalwerte zurückgeführt wird. Das bedeutet, daß auch bei höherer Fahrgeschwindigkeit die Gleitbewegung und damit die Reibung und der Verschleiß an den einzelnen Dichtungen beim Normalwert bleiben. Durch die Kopplung mit den Kammersystemen der anderen Zylinder bleibt der Zwangsausgleich erhalten. Gleichzeitig sind die Räder in jeder Stellung lenkbar.

Weitere Ausführungsformen und Vorteile der Erfindung ergeben sich durch die in den Ansprüchen ferner aufgeführten Merkmale sowie durch das nachstehend angegebene Ausführungsbeispiel. Die Merkmale der Ansprüche können in beliebiger Weise miteinander komibiniert werden, insoweit sie sich nicht offensichtlich gegenseitig ausschließen.

### KURZE BESCHREIBUNG DER ZEICHNUNG

Die Erfindung sowie eine vorteilhafte Ausführungsform derselben wird im folgenden anhand des in der Zeichnung dargestellten Beispiels näher beschrieben und erläutert. Die der Beschreibung der Zeichnung zu entnehmenden Merkmale können einzeln für sich oder zu mehreren in beliebiger Kombination angewandt werden. Es zeigen:
- Fig. 1: ein schematischer Schnitt durch drei Lenkhubvorrichtungen innerhalb einer als Zweikreissystem ausgebildeter Achsausgleichsvorrichtung,

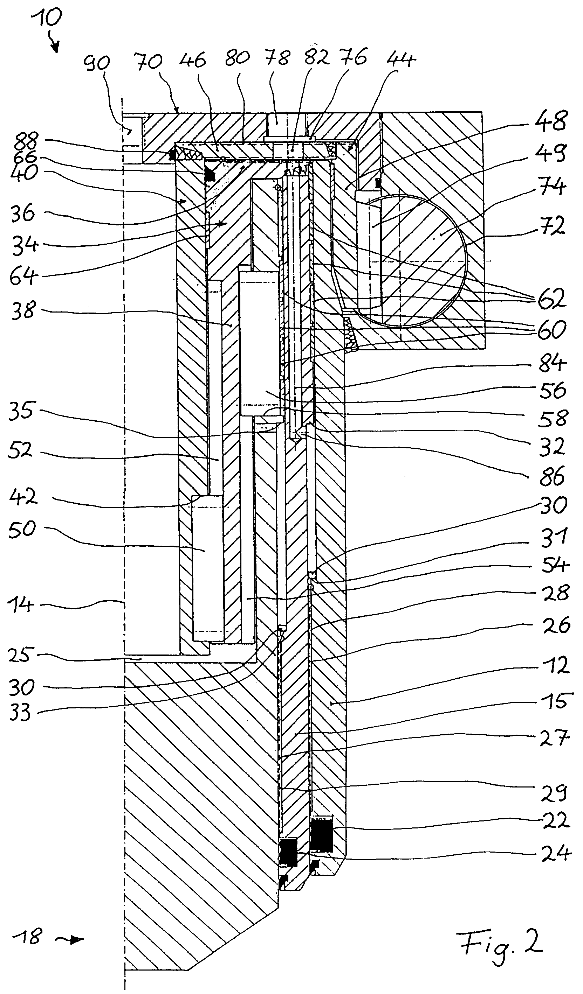

- Fig. 2: schematischer Detaillängsschnitt durch eine Lenkhubvorrichtung mit einem ersten und zweiten Mantelrohr in der theoretischen Stellung bei voll eingefahrenem zweiten Mantelrohr und Kolbeneinrichtung,

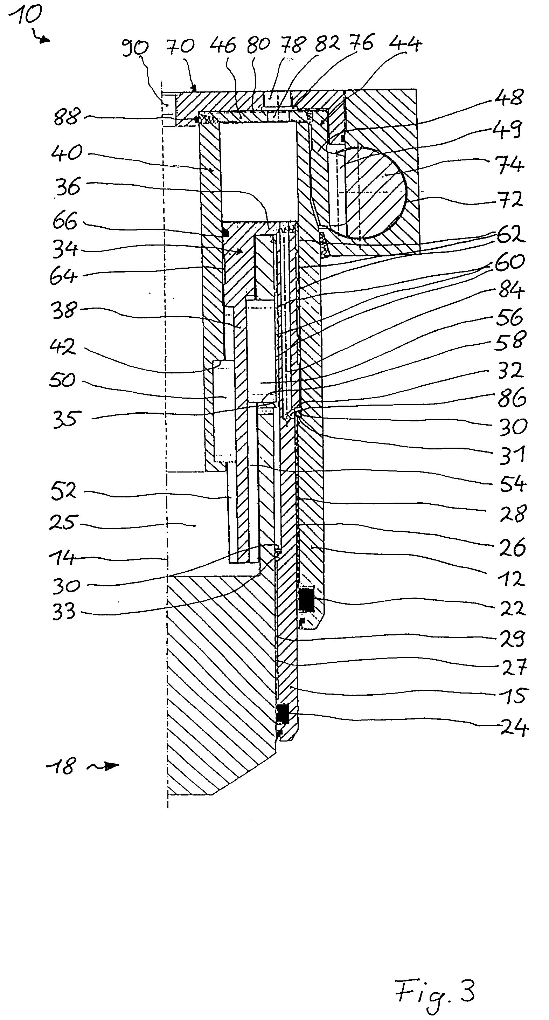

- Fig. 3: schematischer Detaillängsschnitt der Lenkhubvorrichtung gemäß Fig. 1 in der theoretischen Stellung bei voll ausgefahrenem zweiten Mantelrohr und

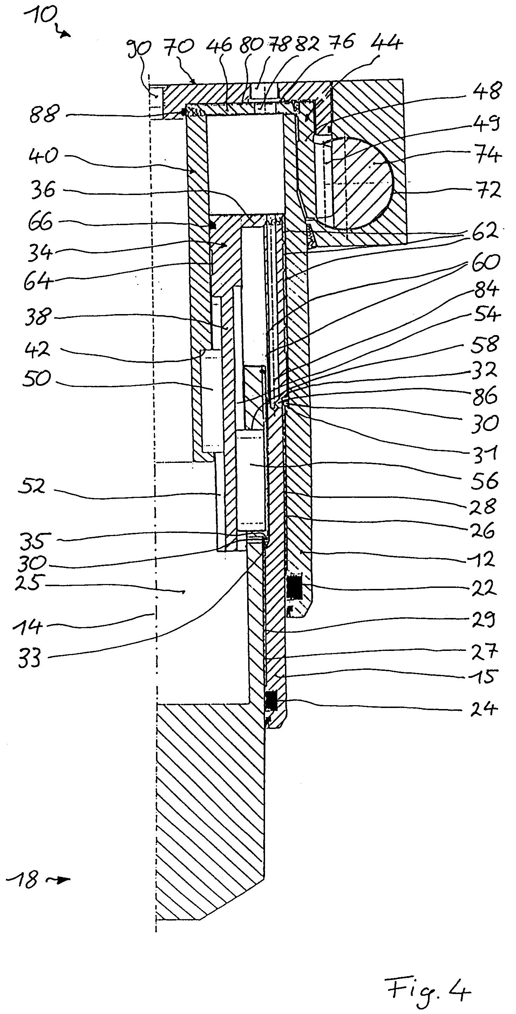

- Fig. 4: schematischer Detaillängsschnitt der Lenkhubvorrichtung gemäß Fig. 2 in der theoretischen Stellung bei voll ausgefahrenem zweiten Mantelrohr und voll ausgefahrener Kolbeneinrichtung.

### WEGE ZUM AUSFÜHREN DER ERFINDUNG

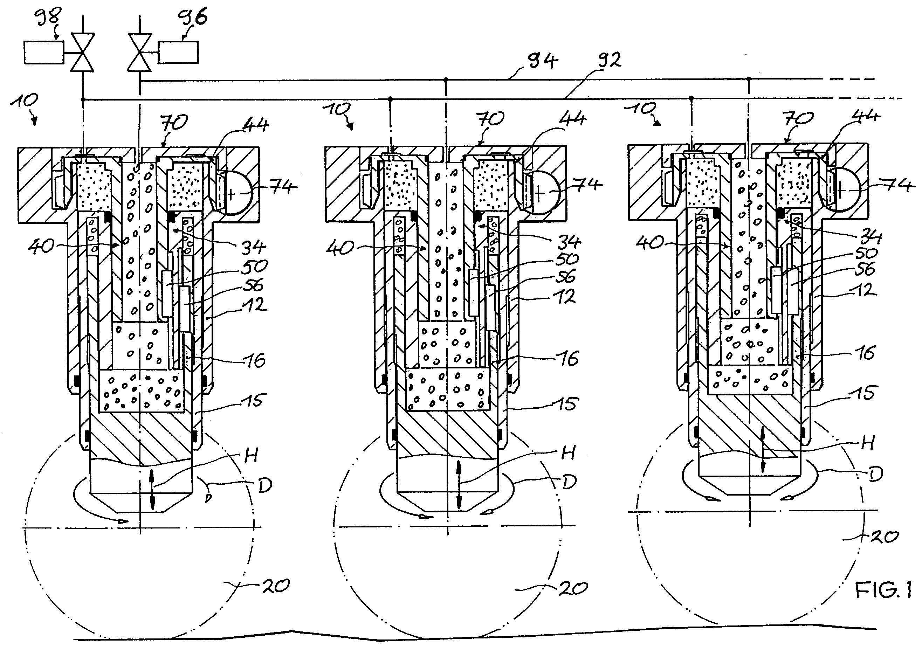

Eine hydraulische Lenkhubvorrichtung 10 weist ein erstes zylindrisches Mantelrohr 12 und ein in dem ersten zylindrischen Mantelrohr 12 längsverschieblich und drehbar um eine gemeinsame Längsachse 14 angeordnetes, druckdicht gelagertes zweites Mantelrohr 15 auf. In dem zweiten Mantelrohr 15 ist ebenfalls eine längsverschiebliche und um die Längsachse 14 drehbare Kolbeneinrichtung 16 angeordnet. Die Kolbeneinrichtung 16 weist in ihrem über das zweite Mantelrohr 15 hinausragenden freien Endbereich eine Anschlußeinrichtung 18 für Radeinheiten 20 auf, wobei die Anschlußeinrichtung 18 in den Figuren lediglich schematisch dargestellt und die Radeinheit 20 in Fig. 1 ebenfalls nur schematisch dargestellt ist.

Das erste Mantelrohr 12 weist in seinem unteren Endbereich einen Dichtungsring 22 auf, der einen druckdichten Anschluß des ersten Mantelrohres 12 an das zweite Mantelrohr 15 bei gleichzeitiger Gewährleistung der Längsverschieblichkeit und Rotation des zweiten Mantelrohres 15 gewährleistet. Das zweite Mantelrohr 15 weist ebenfalls in seinem unteren Endbereich einen Dichtungsring 24 auf, der ein druckdichtes Abschließen des zweiten Mantelrohres 15 gegenüber der Kolbeneinrichtung 16 gewährleistet, wobei gleichzeitig eine Rotation und Längsverschieblichkeit der Kolbeneinrichtung 16 gegenüber dem zweiten Mantelrohr 15 gewährleistet wird.

Die Lenkhubvorrichtung 10 ermöglicht einerseits eine Auf- und Abbewegung (H) der Kolbeneinrichtung 16 zum Ausgleichen von eventuell vorhandenen Bodenunebenheiten bei Einsatz mehrerer Lenkhubvorrichtungen an einer Transportvorrichtung und andererseits eine Drehung (D) der Kolbeneinrichtung um die Längsachse 14 und damit eine Lenkung der Radeinheit 20. Wie in Fig. 1 dargestellt, sind insgesamt drei Lenkhubeinrichtungen 10 zu einer Einheit verbunden. Über dem Dichtungsring 22 bzw. 24 sind aufeinanderfolgende Führungsbänder 26 bzw. 27 innenseitig an dem ersten Mantelrohr 12 bzw. zweiten Mantelrohr 15 angeordnet, die als Lagerung des zweiten Mantelrohres 15 im unteren Endbereich des ersten Mantelrohres 12 und als Lagerung der Kolbeneinrichtung 16 im unteren Endbereich des zweiten Mantelrohres 15 dienen. In dem Bereich der Führungsbänder 26, 27 sind in Längsrichtung verlaufend Nuten 28 bzw. 29 angeordnet, die die Flächen zwischen erstem Mantelrohr 12 und zweiten Mantelrohr 15 bzw. der Kolbeneinrichtung 16 und des zweiten Mantelrohr 15 mit Hydraulikflüssigkeit versorgen, um ein einwandfreies Gleiten der Flächen aufeinander zu gewährleisten.

Oberhalb der Führungsbänder 26, 27 weist das erste Mantelrohr 12 und das zweite Mantelrohr 15 jeweils einen Querschnittssprung 31 bzw. 33 auf, wobei an der Stelle dieses Querschnittssprunges 31, 33 jeweils ein Anlagering 30 angeordnet ist. Dieser Anlagering 30 dient als Anschlag zum Begrenzen der Ausfahrbewegung des zweiten Mantelrohres 15 und der Kolbeneinrichtung 16, die zu diesem Zweck ebenfalls jeweils einen Querschnittssprung 32 bzw. 35 aufweisen, der in voll ausgefahrenem Zustand der Kolbeneinrichtung 16 und des zweiten Mantelrohres 15 mit dem jeweiligen Anlagering 30 in Kontakt kommt.

In ihrem oberen Endbereich weist die Kolbeneinrichtung 16 eine zylindrische Ausnehmung 25 auf, deren Achse mit der Längsachse 14 zusammenfällt, d. h. in diesem Bereich ist die Kolbeneinrichtung 16 als Rohrprofil ausgebildet.

In ihrem oberen Endbereich besitzt das zweite Mantelrohr 15 eine zweite Randausformung 34, die die Wandung der Kolbeneinrichtung 16 umgreift. Die zweite Randausformung 34 wird durch einen ersten Schenkel 36 und einen an den ersten Schenkel 36 anschließenden zweiten Schenkel 38 gebildet, wobei der erste Schenkel 36 in einer Ebene senkrecht zur Längsachse 14 und der zweite Schenkel 38 in einer Zylinderebene parallel zur Längs-achse 14 angeordnet wird. Der erste Schenkel 36 und der zweite Schenkel 38 bilden somit einen zylindrischen Torus, der die Wandung der Kolbeneinrichtung 16 in ihrem Endbereich umgreift. Im Inneren der Ausnehmung 25 der Kolbeneinrichtung 16 ist neben dem zweiten Schenkel 38 der zweiten Randausformung 34 eine im wesentlichen pilzartige Torsionseinrichtung 40 hydraulisch verschieblich gegenüber der Kolbeneinrichtung gelagert, die einen zylindrischen, als Hohlprofil ausgebildeten Hauptkörper mit jeweils am Außenumfang um 90 Grad versetzt angeordneten rechteckförmigen Ausnehmungen 42 in ihrer Wandung aufweist. Die Achse der Torsionseinrichtung 40 fällt mit der Längsachse 14 zusammen. Die Ausnehmungen 42 verlaufen parallel zur Längsachse 14. Auf Höhe der Stirnseite des ersten Mantelrohres 12 bzw. der oberen Außenseite des ersten Schenkels 36 der zweiten Randausformung 34 ist mit außenbündiger Kante an den zylindrischen Körper der Torsionseinrichtung 40 eine erste Randausformung 44 angeschlossen, die als Torus ausgebildet ist, der einen horizontal, d. h. senkrecht zur Längsachse, angeordneten ersten Schenkel 46 und einen zweiten Schenkel 48 besitzt, der rechtwinklig nach unten entlang der Außenwandung des ersten Mantelrohrs 12 verlaufend angeschlossen ist. Der zweite Schenkel 48 ist hierbei mit einem nach außen weisenden Zahnkranz 49 versehen.

In den Ausnehmungen 42 der Torsionseinrichtung 40 sind als Flachblechelemente ausgebildete Federelemente 50 angeordnet, die die Außenwandung der Torsionseinrichtung 40 überragen. Diese Federelemente 50 greifen jeweils in an dem zweiten Schenkel 38 der zweiten Randausformung 34 des zweiten zylindrischen Mantelrohrs 15 vorhandene parallel zur Längsachse 14 verlaufende Längsnute 52 ein, so daß eine Längsverschieblichkeit zwischen Torsionseinrichtung 40 und zweitem Mantelrohr 15 gewährleistet ist. Weiterhin besitzt der zweite Schenkel 38 auf der diesen Nuten 52 gegenüberliegenden Seite weitere Nuten 54, die ebenfalls parallel zur Längsachse 14 in der Wandung des zweiten Schenkels 38 vorhanden sind. In diesen Nuten 54 sind jeweils ebenfalls als Flachblechelemente ausgebildete Federelemente 56 längsverschieblich geführt, die in einer Rechteckausnehmung 58 der Wandung der Kolbeneinrichtung 16 angeordnet sind. Die Federelemente 56 und die Nuten 54 sind ebenfalls im Umfangsrichtung um 90° versetzt vorhanden.

Die Außenwandung der Kolbeneinrichtung 16 ist in ihrem oberen Endbereich an auf der Innenseite des zweiten Mantelrohrs 15 vorhandenen Führungsbändern 60 gelagert. Die Außenwandung des zweiten Mantelrohrs 15 ist wiederum ebenfalls an auf der Innenwandung des ersten Mantelrohrs 12 vorhandenen Führungsbändern 62 gelagert. Schließlich ist noch im oberen Endbereich außenseitig am zweiten Schenkel 38 der Randausformung 34 ein Führungsband 64 vorhanden, an dem die Außenwandung des Hauptkörpers der Torsionseinrichtung 40 anliegt. Oberhalb dieses Fürhungsbandes 64 ist ein Dichtungsring 66 an der Außenseite des zweiten Schenkels 38 der zweiten Randausformung 34 angeordnet, der dichtend an die Außenwandung des Hauptkörpers der Torosionseinrichtunganliegt.

Oberseitig ist die Torsionseinrichtung 40 und deren nach außen überragende erste Randausformung 44 von einer Deckeleinrichtung 70 umgeben, die unterhalb des zweiten Schenkels 48 der ersten Randausformung 44 dichtend an die Außenwandung des ersten Mantelrohres 12 angeschlossen ist. In einer Draufsicht gesehen weist die Deckeleinrichtung 70 einen im wesentlichen quadratischen Grundriß auf. Auf einer Seite in einer tangentialen parallelen Ebene zum ersten Mantelrohr ist eine durchgehende Ausnehmung 72 vorhanden, in der eine verschieblich gelagerte Zahnstange 74 hydraulisch gelagert ist, die in den Zahnkranz 49 eingreift. Die Ausbildung der Ausnehmung 72 mit Zahnstange 74 bzw. deren hydraulischen Steuerung ist bekannt.

Die Deckeleinrichtung 70 weist unterseitig eine kreisringförmige Ausnehmung auf, wobei die Breite der kreisringförmigen Ausnehmung im wesentlichen der Breite des ersten Schenkels 46 der ersten Randausformung 44 der Torsionseinrichtung 40 entspricht. Innenseitig besitzt die Deckeleinrichtung 70 einen Ringkanal 76, der über zumindest eine Bohrung 78 von außen zugänglich ist. In der Oberseite des ersten Schenkels 46 der ersten Randausformung 44, die die Lagerfläche zwischen Torsionseinrichtung 40 und Deckeleinrichtung 70 bildet, ist eine spiralförmige Nut 80 eingefräst, in der über die Bohrung 78 und den Ringkanal 76 Hydraulikflüssigkeit zugeführt werden kann.

Der erste Schenkel 46 der ersten Randausformung 44 weist im Bereich der Bohrung 78 ebenfalls eine an den Ringkanal 76 angeschlossene Bohrung 82 auf. Diese Bohrung 82 erfüllt den Zweck, die Zuführung von Hydraulikflüssigkeit in den Raum zwischen der Torsionseinrichtung 40 und dem zweiten Mantelrohr 15 zu gewährleisten. Hierbei ist auf der Unterseite des ersten Schenkels 46 der ersten Randausformung 44 und auf der Oberseite des ersten Schenkels 36 der zweiten Randausformung 34 jeweils ein Nutensystem eingefräst, das sich überkreuzt, so daß der Bereich zwischen Torsionseinrichtung und zweitem Mantelrohr 15 auch bei anliegenden Flächen problemlos mit Hydraulikflüssigkeit befüllt werden kann. Desweiteren ist im Bereich der Bohrung 82 eine in der Wandung des zweiten Mantelrohres 15 vorhandene Bohrung 84 parallel zur Längsachse 14 vorhanden, die über eine anschließende rechtwinklig zur Bohrung 84 vorhandene Bohrung 86 den Bereich zwischen erstem Mantelrohr 12 und zweitem Mantelrohr 15 mit Hydraulikflüssigkeit versorgt.

Zur Bildung einer über die Bohrung 78 von außen zugänglichen druckdichten ersten hydraulischen Kammer ist im Anschlußbereich des ersten Schenkels 46 der ersten Randausformung 44 an den Hauptkörper der Torsionseinrichtung 40 ein an der Deckeleinrichtung 70 vorhandener Dichtring 88 vorhanden. Durch die Dichtringe 88, 66 und 22 wird ein erstes abgeschlossenes Kammersystem gebildet, das über die Bohrung 78 von außen mit Hydraulikflüssigkeit beaufschlagbar ist und das die erste Randausformung 44 der Torsionseinrichtung 40, den Zahnkranz 49, die Zahnstange 74 vollständig mit Hydraulikflüssigkeit umgibt und die das Vorhandensein von Hydraulikflüssigkeit zwischen der Außenwandung des zweiten Mantelrohres 15 und der Innenwandung des ersten Mantelrohres 12 gewährleistet.

Das Beaufschlagen dieses ersten Systems mit Hydraulikflüssigkeit bewirkt, daß das zweite Mantelrohr 15 und die Kolbeneinrichtung 16 nach unten verschoben werden bzw. durch Entweichen von Hydraulikflüssigkeit aus diesem ersten System eine Verschiebung nach oben ermöglicht wird.

Ein zweites Kammersystem wird durch die Dichtungen 88, 66 und 24 von dem ersten Kammersystem getrennt. Diese zweite Kammersystem ist durch eine zentrale in der Längsachse 14 an der Deckeleinrichtung 70 vorhandene Bohrung 90 von außen mit Hydraulikflüssigkeit beaufschlagbar. Das zweite Kammersystem wird durch den Innenraum des Hauptkörpers der Torsionseinrichtung 40, den zwischen der Torsionseinrichtung 40 und der Ausnehmung 25 der Kolbeneinrichtung 16 vorhandenen Raum gebildet, wobei gleichzeitig die Versorgung des Bereichs zwischen der Außenseite der Kolbeneinrichtung 16 mit der Innenseite des zweiten Mantelrohres 15 und der sich gegenüberliegenden Flächen des zweiten Schenkels 38 der zweiten Randausformung des zweiten Mantelrohrs 15 und der Außenwandung der Torsionseinrichtung 40 mit Hydraulikflüssigkeit gewährleistet wird. Ein Beaufschlagen dieses zweiten Kammersystems mit Hydraulikflüssigkeit bewirkt, daß die Kolbeneinrichtung relativ zum zweiten Mantelrohr 15 bzw. zum ersten Mantelrohr 12 nach unten verschoben wird bzw. bei Entweichen von Hydraulikflüssigkeit nach oben verschoben wird.

In Fig. 1 ist die Arbeitsweise und die Verbindung untereinander einer Achsausgleichsvorrichtung mit drei zu einer Arbeitsgruppe zusammengefaßten Lenkhubvorrichtungen 10 stark schematisiert dargestellt. Jede Lenkhubvorrichtung 10 weist ein erstes Kammersystem und ein zweites Kammersystem gemäß der oben dargestellten Beschreibung auf. Beide Kammersysteme sind über die Öffnungen 78 bzw. 90 von außen zugänglich und mit Hydraulikflüssigkeit, vorzugsweise Hydrauliköl, gefüllt. Das erste Kammersystem und das zweite Kammersystem einer jeden Lenkhubvorrichtung sind über gemeinsame Verbindungsleitungen 92 bzw. 94 miteinander gekoppelt. Über Füllhähne 96 bzw. 98 werden die Kammersysteme mit Öl versorgt, wobei die zusätzlich vorhandene Ölquelle nicht dargestellt ist. Die Kammer des ersten Systems ist in Fig. 1 mittels Punkten und die Kammer des zweiten Systems mittels Kreisen schematisch dargestellt.

Die Arbeitsweise der hydraulischen Achsausgleichsvorrichtung wird im folgenden kurz beschrieben. Das in den ersten Kammersystemen, die über die Leitung 92 verbunden sind, vorhandene Öl gewährleistet eine gleichmäßige Kraftübertragung wie bei bekannten Vorrichtungen. Die Verbindungsleitungen können über die Füllhähne 96, 98 verschlossen oder geöffnet werden. Im Betriebszustand sind die Füllhähne 98 geschlossen. Über die Verbindungsleitungen eines Systems 94 oder 92 werden im Betrieb die Zylinder so mit Betriebsmittel gefüllt, daß beide Zylinder in Mittellage stehen. Dann wird mit dem Verschlußglied 98 und 96 abgesperrt und die Fahrt (Ausgleich +/-) kann beginnen. Der in dem zweiten Kammersystem durch die auftretende Last sich aufbauende Druck verteilt sich über die Leitung 94 in den zweiten Kammersystemen untereinander. Das zweite Kammersystem schwimmt somit im System der ersten Kammer. In den Leitungen 92 und 94 herrschen entsprechend der wirksamen konstruktiv festgelegten Flächen unterschiedliche Drücke. Wird bei Einsatzbeginn das erste Kammersystem oder zweite Kammersystem geladen, hebt sich die Achseinheit um den Hub entsprechend der eingespeisten Ölmenge. Zur Fahrt wird normalerweise der halbe Hub ausgefahren, damit die Schwankungen z. B. der Straße in plus und minus verlaufen können. Wird in diesem Zeitpunkt das zweite Kammersystem dazugeladen mit 50 % seines Hubes, so ist das Achssystem betriebsbereit.

Überrollt das Achssystem eine Bodenwelle, wird Öl innerhalb der Kammersysteme hin- und herbewegt. Der Achsausgleich stellt sich ventillos ein. Da der hydraulische Widerstand mit der Geschwindigkeit quadratisch wächst, pendelt sich eine gleichmäßige Aufteilung der Ausgleichsbewegung zwischen dem ersten und zweiten System ein. Bei Leckage oder Platzen eines Schlauches oder eines Kammersystems fällt das Achssystem auf die halbe Hubhöhe zurück. In dem verbleibenden Restsystem erhöht sich jedoch dadurch der Arbeitsdruck nicht. Das Restsystem funktioniert weiter. In jedem Zustand der einzelnen Kammersysteme kann erfindungsgemäß eine problemlose Lenkung der Radeinheiten 23 durch Verschieben der Zahnstange 74 vorgenommen werden. Die Verschiebung kann hydraulisch oder pneumatisch erfolgen. Auf zusätzliche, für die Lenkung der beiden bekannten Vorrichtungen erforderliche Schlaucheinheiten kann verzichtet werden.. Dadurch, daß die für die Lenkung benötigten Teile im wesentlichen alle in Hydrauliköl schwimmen, ist deren Verschleiß praktisch gleich Null, wodurch nahezu eine Wartungsfreiheit in dieser Hinsicht erzielt werden kann. Die erfindungsgemäße Lenkhubvorrichtung kombiniert die bekannte als Zweikreissystem ausgebildete hydraulische Achsausgleichsvorrichtung mit den Vorteilen einer problemlosen Lenkung der Radeinheiten in jedem Hub- bzw. Lenkzustand der Vorrichtung.

## Patentansprüche

1. Lenkhubvorrichtung (10) für eine als Zweikreissystem ausgebildete hydraulische oder pneumatische Achsausgleichsvorrichtung, mit
a) einem ersten außenliegenden Mantelrohr (12),
b) einem druckdicht in das erste Mantelrohr (12) eingesteckten und längsverschieblich gelagerten zweiten Mantelrohr (15),
c) einer druckdicht in dem zweiten Mantelrohr (15) vorhandenen längsverschieblich gelagerten Kolbeneinrichtung (16),
d) einem von außen beaufschlagbaren ersten geschlossenen Kammersystem zur Steuerung der Relativverschiebung zwischen zweitem Mantelrohr (15) und erstem Mantelrohr (12),
e) einem von außen beaufschlagbaren zweiten geschlossenen Kammersystem zur Steuerung der Relativverschiebung zwischen Kolbeneinrichtung (16) und zweitem Mantelrohr (15), gekennzeichnet durch
f) eine in einem Endbereich der Kolbeneinrichtung (16) längsverschieblich zur Kolbeneinrichtung (16) gelagerten Torsionseinrichtung (40),
aa) die mit einer die Wandung der Kolbeneinrichtung (16) zumindest bereichsweise umgreifenden zweiten Randausformung (34) des zweiten Mantelrohrs (15) in Eingriff steht, derart, daß eine Drehung der Torsionseinrichtung (40) eine Drehung des zweiten Mantelrohrs (15) bewirkt und
bb) die eine das erste Mantelrohr (12) zumindest bereichsweise übergreifende erste Randausformung (44) aufweist, wobei
cc) die zweite Randausformung (34) des zweiten Mantelrohrs (15) mit der Wandung der Kolbeneinrichtung (16) in Eingriff steht, derart, daß eine Drehung des zweiten Mantelrohrs (15) eine Drehung der Kolbeneinrichtung (16) bewirkt,
g) zumindest eine Antriebseinrichtung (74), die zumindest bereichsweise auf die erste Randausformung (44) der Torsionseinrichtung (40) zum Drehen der Torsionseinrichtung (40) einwirkt und
h) eine an dem ersten Mantelrohr (12) befestigten Deckeleinrichtung (70), die die Torsionseinrichtung (40) und/oder Antriebseinrichtung (74) zur Bildung des ersten Kammersystems zumindest teilweise umgibt.

2. Lenkhubvorrichtung nach Anspruch 1,
**dadurch gekennzeichnet,** daß
die Kolbeneinrichtung (16) zumindest eine erste Ausnehmung (58) aufweist, in die ein entsprechend geformtes und an dem zweiten Mantelrohr (15) längsverschieblich angeschlossenes erstes Koppelbauteil (56) eingreift, das die Kopplung der Drehbewegung von dem zweiten Mantelrohr (15) und der Kolbeneinrichtung (16) bewirkt, und die Torsionseinrichtung (40) zumindest eine Ausnehmung (42) aufweist, in die ein entsprechend geformtes und an dem zweiten Mantelrohr (15) längsverschieblich angeschlossenes zweites Koppelbauteil (50) eingreift, das die Kopplung der Drehbewegung von dem zweiten Mantelrohr (15) und der Torsionseinrichtung (40) bewirkt.

3. Lenkhubvorrichtung nach Anspruch 1,
**dadurch gekennzeichnet,** daß
die zweite Randausformung (34) des zweiten Mantelrohres (15) zumindest eine erste Ausnehmung aufweist, in die ein entsprechend geformtes und an der Kolbeneinrichtung (16) längsverschieblich angeschlossenes erstes Koppelbauteil eingreift, das die Kopplung der Drehbewegung von dem zweiten Mantelrohr (15) und der Kolbeneinrichtung (16) bewirkt, und die zweite Randausformung (34) des zweiten Mantelrohrs (15) zumindest eine zweite Ausnehmung aufweist, in die ein entsprechend geformtes und an der Torsionseinrichtung (40) längsverschieblich angeschlossenes zweites Koppelbauteil eingreift, das die Kopplung der Drehbewegung von dem zweiten Mantelrohr (15) und der Torsionseinrichtung (40) bewirkt.

4. Lenkhubvorrichtung nach Anspruch 2,
**dadurch gekennzeichnet,** daß
die Koppelbauteile jeweils als Federelement (50, 56) ausgebildet sind, die in an der zweiten Randausformung (34) des zweiten Mantelrohrs (15) ausgebildeten Nuten (52, 54) längsverschieblich geführt sind.

5. Lenkhubvorrichtung nach Anspruch 2 oder 3 oder 4,
**dadurch gekennzeichnet,** daß
entlang eines Kreises senkrecht zur Längsachse der Kolbeneinrichtung jeweils vier Koppelbauteile oder Federelemente um 90 Grad versetzt angeordnet sind.

6. Lenkhubvorrichtung nach Anspruch 4 oder 5,
**dadurch gekennzeichnet,** daß
das Federelement als quaderförmiges Bauteil ausgebildet ist.

7. Lenkhubvorrichtung nach einem oder mehreren der vorstehenden Ansprüche,
**dadurch gekennzeichnet,** daß
die das erste Mantelrohr (12) übergreifende erste Randausformung (44) der Torsionseinrichtung (40) und/oder die die Wandung der Kolbeneinrichtung (16) übergreifende zweite Randausformung (34) des zweiten Mantelrohrs (15) durch einen Torus gebildet wird.

8. Lenkhubvorrichtung nach Anspruch 7,
**dadurch gekennzeichnet,** daß
der Torus einen L-förmigen Querschnitt mit einem ersten Schenkel (36, 46) und einem zweiten Schenkel (38, 48) aufweist und der erste Schenkel (36, 46) im wesentlichen parallel in einer Ebene senkrecht zur Längsachse und der zweite Schenkel (48) der ersten Randausformung (44) im wesentlichen in einer Zylinderebene (36) außerhalb des ersten Mantelrohres und der zweite Schenkel der zweiten Randausformung (34) zwischen Torsionseinrichtung (40) und Kolbeneinrichtung (16) angeordnet ist.

9. Lenkhubvorrichtung nach Anspruch 8,
**dadurch gekennzeichnet,** daß
der zweite Schenkel (48) der ersten Randausformung (44) eine Zahnkranzeinrichtung (49) aufweist, in die zumindest eine eine Zahnstange (74) aufweisende Antriebseinrichtung eingreift.

10. Lenkhubvorrichtung nach einem oder mehreren der vorstehenden Ansprüche,
**dadurch gekennzeichnet,** daß
die Antriebseinrichtung oder Zahnstange (74) in der Deckeleinrichtung (70) zum Bilden des ersten Kammersystems zusammen mit der Torsionseinrichtung (40), dem zweiten Mantelrohr (15) und dem ersten Mantelrohr (12) gelagert ist.

11. Lenkhubvorrichtung nach einem oder mehreren der vorstehenden Ansprüche 2 bis 10,
**dadurch gekennzeichnet,** daß
die Kolbeneinrichtung (16) in dem die längsverschiebliche Torsionseinrichtung (40) aufweisenden Endbereich als Rohrquerschnitt ausgebildet ist.

12. Lenkhubvorrichtung nach Anspruch 8,
**dadurch gekennzeichnet,** daß
der erste Schenkel (46) der ersten Randausformung (44) der Torsionseinrichtung (40) außenbündig mit einer Außenseite der Torsionsvorrichtung (40) angeordnet ist, wodurch eine senkrecht zur Längsachse angeordnete Außenlagerfläche gebildet wird, und die der Innenseite der Deckeleinrichtung (70) zugewandte Auflagerfläche eine spiralförmige Nut (80) aufweist.

13. Lenkhubvorrichtung nach einem oder mehreren der vorstehenden Ansprüche,
**dadurch gekennzeichnet,** daß
der Antrieb der Antriebseinrichtung zum Lenken der Lenkhubvorrichtung als hydraulischer, pneumatischer oder mechanischer Antrieb ausgebildet ist.

14. Lenkhubvorrichtung nach Anspruch 8,
**dadurch gekennzeichnet,** daß
an beiden Endbereichen der Zahnstange jeweils eine abgeschlossene hydraulische oder pneumatische Kammer vorhanden ist, deren Medium jeweils an der Stirnseite der Zahnstange ansteht, und ein Steuersystem vorhanden ist, das über die Kammer die Verschiebebewegung der Zahnstange steuert.

15. Lenkhubvorrichtung nach einem oder mehreren der vorstehenden Ansprüche,
**dadurch gekennzeichnet,** daß
die Torsionseinrichtung in dem Endbereich der Kolbeneinrichtung als Vollprofil mit einer Bohrung als Ein- bzw. Auslaß für die zweite Kammer ausgebildet ist.

16. Lenkhubvorrichtung nach einem oder mehreren der vorstehenden Ansprüche,
**dadurch gekennzeichnet,** daß
die Torsionseinrichtung in dem Endbereich der Kolbeneinrichtung als Hohlprofil ausgebildet ist.

17. Lenkhubvorrichtung nach Anspruch 2,
**dadurch gekennzeichnet,** daß
die Koppelbauteile als Nabenprofile, insbesondere Evolventen oder dergleichen, ausgebildet sind.

## Claims

1. Steering/lifting appliance (10) for a hydraulic or pneumatic axle compensation appliance configured as a two-circuit system, having
a) a first external jacket tube (12),
b) a second jacket tube (15) inserted in a pressure-tight manner in the first jacket tube (12) and supported so as to be longitudinally displaceable,
c) a piston device (16) present in a pressure-tight manner in the second jacket tube (15) and supported so as to be longitudinally displaceable,
d) a first closed chamber system to which admission can occur from the outside for controlling the relative displacement between the second jacket tube (15) and the first jacket tube (12),
e) a second closed chamber system to which admission can occur from the outside for controlling the relative displacement between the piston device (16) and the second jacket tube (15), characterized by
f) a torsion device (40) supported in an end region of the piston device (16) and longitudinally displaceable relative to the piston device (16),
aa) which torsion device is in engagement with a second skirt profile (34) of the second jacket tube (15), which profile surrounds the wall of the piston device (16) at least regionally, in such a way that turning of the torsion device (40) effects turning of the second jacket tube (15) and
bb) which has a first skirt profile (44) passing over the first jacket tube (12) at least regionally,
cc) the second skirt profile (34) of the second jacket tube (15) being in engagement with the wall of the piston device (16) in such a way that turning of the second jacket tube (15) effects turning of the piston device (16),
g) at least one drive device (74) which acts at least regionally on the first skirt profile (44) of the torsion device (40) to turn the torsion device (40) and
h) a cap device (70) which is fastened to the first jacket tube (12) and which at least partially encloses the torsion device (40) and/or drive device (74) to form the first chamber system.

2. Steering/lifting appliance according to Claim 1, characterized in that the piston device (16) has at least a first recess (58) in which a correspondingly shaped first coupling component (56) engages which is connected to the second jacket tube (15) so as to be longitudinally displaceable and which effects the coupling of the turning motion of the second jacket tube (15) and the piston device (16), and the torsion device (40) has at least one recess (42) in which a correspondingly shaped second coupling component (50) engages which is connected to the second jacket tube (15) so as to be longitudinally displaceable and which effects the coupling of the turning motion of the second jacket tube (15) and the torsion device (40).

3. Steering/lifting appliance according to Claim 1, characterized in that the second skirt profile (34) of the second jacket tube (15) has at least a first recess in which a correspondingly shaped first coupling component engages which is connected to the piston device (16) so as to be longitudinally displaceable and which effects the coupling of the turning motion of the second jacket tube (15) and the piston device (16), and the second skirt profile (34) of the second jacket tube (15) has at least one second recess in which a correspondingly shaped second coupling component engages which is connected to the torsion device (40) so as to be longitudinally displaceable and which effects the coupling of the turning motion of the second jacket tube (15) and the torsion device (40).

4. Steering/lifting appliance according to Claim 2, characterized in that the coupling components are respectively configured as spring elements (50, 56) which are guided so as to be longitudinally displaceable in grooves (52, 54) configured on the second skirt profile (34) of the second jacket tube (15).

5. Steering/lifting appliance according to Claim 2 or 3 or 4, characterized in that four coupling components or spring elements are respectively arranged offset by 90° along a circle at right angles to the longitudinal axis of the piston device.

6. Steering/lifting appliance according to Claim 4 or 5, characterized in that the spring element is configured as a cuboidal component.

7. Steering/lifting appliance according to one or more of the preceding claims, characterized in that the first skirt profile (44) of the torsion device (40) passing over the first jacket tube (12) and/or the second skirt profile (34) of the second jacket tube (15) passing over the wall of the piston device (16) is formed by a torus.

8. Steering/lifting appliance according to Claim 7, characterized in that the torus has an L-shaped cross-section with a first arm (36, 46) and a second arm (38, 48) and the first arm (36, 46) is arranged essentially parallel in a plane at right angles to the longitudinal axis and the second arm (48) of the first skirt profile (44) is arranged essentially in a cylindrical plane (36) outside the first jacket tube and the second arm of the second skirt profile (34) is arranged between the torsion device (40) and the piston device (16).

9. Steering/lifting appliance according to Claim 8, characterized in that the second arm (48) of the first skirt profile (44) has a toothed ring device (49) in which at least one drive device having a rack (74) engages.

10. Steering/lifting appliance according to one or more of the preceding claims, characterized in that the drive device or rack (74) is supported in the cap device (70) to form the first chamber system in association with the torsion device (40), the second jacket tube (15) and the first jacket tube (12).

11. Steering/lifting appliance according to one or more of the preceding Claims 2 to 10, characterized in that the piston device (16) is configured as a tubular cross-section in the end region having the torsion device (40) which is longitudinally displaceable.

12. Steering/lifting appliance according to Claim 8, characterized in that the first arm (46) of the first skirt profile (44) of the torsion device (40) is arranged externally flush with an outer surface of the torsion appliance (40), an outside support surface arranged at right angles to the longitudinal axis being formed by this means and the support surface facing towards the inside of the cap device (70) having a spiral-shaped groove (80).

13. Steering/lifting appliance according to one or more of the preceding claims, characterized in that the drive of the drive device is configured to steer the steering/lifting appliance as a hydraulic, pneumatic or mechanical drive.

14. Steering/lifting appliance according to Claim 8, characterized in that one closed hydraulic or pneumatic chamber is present at each of the two end regions of the rack, the medium of which chamber being respectively present at the end surface of the rack and a control system being present which controls the displacement motion of the rack by means of the chamber.

15. Steering/lifting appliance according to one or more of the preceding claims, characterized in that the torsion device is configured in the end region of the piston device as a solid profile with a hole as the inlet and outlet for the second chamber.

16. Steering/lifting appliance according to one or more of the preceding claims, characterized in that the torsion device is configured as a hollow profile in the end region of the piston device.

17. Steering/lifting appliance according to Claim 2, characterized in that the coupling components are configured as tooth profiles, in particular involutes or the like.

## Revendications

1. Dispositif de levage orientable (10) pour un dispositif hydraulique ou pneumatique d'équilibrage des essieux réalisé sous la forme d'un système à deux circuits, comprenant :
a) une première enveloppe tubulaire (12) située extérieurement,
b) une deuxième enveloppe tubulaire (15) qui est enfoncée dans la première enveloppe tubulaire (12) d'une manière étanche à la pression et qui est montée en pouvant coulisser longitudinalement,
c) un dispositif formant piston (16) qui est disposé dans la deuxième enveloppe tubulaire (15) d'une manière étanche à la pression et qui est monté en pouvant coulisser longitudinalement,
d) un premier système de chambre fermé pouvant être alimenté depuis l'extérieur pour commander le déplacement relatif entre la deuxième enveloppe tubulaire (15) et la première enveloppe tubulaire (12),
e) un deuxième système de chambre fermé pouvant être alimenté depuis l'extérieur pour commander le déplacement relatif entre le dispositif formant piston (16) et la deuxième enveloppe tubulaire (15), caractérisé par :
f) un dispositif de torsion (40) qui est monté dans une zone d'extrémité du dispositif formant piston (16) en pouvant coulisser longitudinalement par rapport au dispositif formant piston (16),
aa) qui est en prise avec un deuxième prolongement (34) du bord de la deuxième enveloppe tubulaire (15), celui-ci recouvrant la paroi du dispositif formant piston (16), du moins partiellement, d'une manière telle qu'une rotation du dispositif de torsion (40) produise une rotation de la deuxième enveloppe tubulaire (15),
bb) et qui présente un premier prolongement (44) de son bord, celui-ci recouvrant la première enveloppe tubulaire (12), du moins partiellement, cependant que :
cc) le deuxième prolongement (34) du bord de la deuxième enveloppe tubulaire (15) est en prise avec la paroi du dispositif formant piston (16) d'une manière telle qu'une rotation de la deuxième enveloppe tubulaire (15) produise une rotation du dispositif formant piston (16),
g) au moins un dispositif d'entraînement (74) qui agit, du moins par zones, sur le premier prolongement (44) du bord du dispositif de torsion (40) en vue de faire tourner le dispositif de torsion (40), et :
h) un dispositif formant couvercle (70) qui est fixé à la première enveloppe tubulaire (12) et qui recouvre le dispositif de torsion (40) et/ou le dispositif d'entraînement (74), du moins partiellement, en vue de former le premier système de chambre.

2. Dispositif de levage orientable salon la revendication 1, caractérisé par le fait que le dispositif formant piston (16) présente au moins un premier évidement (58) dans lequel pénètre un premier élément constitutif d'accouplement (56) qui est conformé en conséquence, qui est raccordé à la deuxième enveloppe tubulaire (15) en pouvant coulisser longitudinalement et qui produit l'accouplement entre les déplacements en rotation de la deuxième enveloppe tubulaire (15) et du dispositif formant piston (16), et que le dispositif de torsion (40) comporte au moins un évidement (42) dans lequel pénètre un deuxième élément constitutif d'accouplement (50) qui est conformé en conséquence, qui est raccordé à la deuxième enveloppe tubulaire (15) en pouvant coulisser longitudinalement et qui produit l'accouplement entre les déplacements en rotation de la deuxième enveloppe tubulaire (15) et du dispositif de torsion (40).

3. Dispositif de levage orientable selon la revendication 1, caractérisé par le fait que le deuxième prolongement (34) du bord de la deuxième enveloppe tubulaire (15) présente au moins un premier évidement dans lequel pénètre un premier élément constitutif d'accouplement qui est conformé en conséquence, qui est raccordé au dispositif formant piston (16) en pouvant coulisser longitudinalement et qui produit l'accouplement entre les déplacements en rotation de la deuxième enveloppe tubulaire (15) et du dispositif formant piston (16), et que le deuxième prolongement (34) du bord de la deuxième enveloppe tubulaire (15) comporte au moins un deuxième évidement dans lequel pénètre un deuxième élément constitutif d'accouplement qui est conformé en conséquence, qui est raccordé au dispositif de torsion (40) en pouvant coulisser longitudinalement et qui produit l'accouplement entre les déplacements en rotation de la deuxième enveloppe tubulaire (15) et du dispositif de torsion (40).

4. Dispositif de levage orientable selon la revendication 2, caractérisé par le fait que les éléments constitutifs d'accouplement sont réalisés chacun sous la forme d'éléments élastiques (50, 56) qui sont guidés en pouvant coulisser longitudinalement dans des rainures (52, 54) ménagées dans le deuxième prolongement (34) du bord de la deuxième enveloppe tubulaire (15).

5. Dispositif de levage orientable selon la revendication 2 ou 3 ou 4, caractérisé par le fait que quatre éléments constitutifs ou éléments élastiques sont disposés à chaque fois sur un cercle perpendiculaire à l'axe longitudinal du dispositif formant piston en étant décalés de 90 degrés.

6. Dispositif de levage orientable selon la revendication 4 ou 5, caractérisé par le fait que l'élément élastique est réalisé sous la forme d'un élément constitutif parallélépipédique.

7. Dispositif de levage orientable selon une ou plusieurs des revendications précédentes, caractérisé par le fait que le premier prolongement (44) du bord du dispositif de torsion (40) qui recouvre la première enveloppe tubulaire (12) et/ou le deuxième prolongement (34) du bord de la deuxième enveloppe tubulaire (15) qui recouvre la paroi du dispositif formant piston (16) est constitué par un tore.

8. Dispositif de levage orientable selon la revendication 7, caractérisé par le fait que le tore présente une section transversale en forme de L comprenant une première aile (36, 46) et une deuxième aile (38, 48), que la première aile (36, 46) est disposée pour l'essentiel parallèlement à un plan perpendiculaire à l'axe longitudinal, que la deuxième aile (48) du premier prolongement de bord (44) est disposée pour l'essentiel dans une surface cylindrique (36) à l'extérieur de la première enveloppe tubulaire, et que la deuxième aile du deuxième prolongement de bord (34) est disposée entre le dispositif de torsion (40) et le dispositif formant piston (16).

9. Dispositif de levage orientable selon la revendication 8, caractérisé par le fait que la deuxième aile (48) du premier prolongement de bord (44) présente un dispositif à couronne dentée (49) avec lequel vient en prise au moins un dispositif d'entraînement qui comporte une crémaillère (74).

10. Dispositif de levage orientable selon une ou plusieurs des revendications précédentes, caractérisé par le fait que le dispositif d'entraînement ou la crémaillère (74) est montée dans le dispositif formant couvercle (70) pour former le premier système de chambre conjointement avec le dispositif de torsion (40), la deuxième enveloppe tubulaire (15) et la première enveloppe tubulaire (12).

11. Dispositif de levage orientable selon une ou plusieurs des revendications précédentes 2 à 10, caractérisé par le fait que le dispositif formant piston (16) présente une section transversale circulaire dans la région de son extrémité qui comporte le dispositif de torsion (40) pouvant coulisser longitudinalement.

12. Dispositif de levage orientable selon la revendication 8, caractérisé par le fait que la première aile (46) du premier prolongement (44) du bord du dispositif de torsion (40) est disposée en étant alignée extérieurement sur un côté extérieur du dispositif de torsion (40), ce qui forme une surface d'appui extérieure disposée perpendiculairement à l'axe longitudinal, et que la surface d'appui tournée vers le côté intérieur du dispositif formant couvercle (70) présente une rainure en forme de spirale (80).

13. Dispositif de levage orientable selon une ou plusieurs des revendications précédentes, caractérisé par le fait que l'entraînement du dispositif d'entraînement qui est destiné à orienter le dispositif de levage orientable est réalisé sous la forme d'un entraînement hydraulique, pneumatique ou mécanique.

14. Dispositif de levage orientable selon la revendication 8, caractérisé par le fait qu'il est prévu à chaque fois sur les deux zones d'extrémité de la crémaillère une chambre hydraulique ou pneumatique qui est fermée et dont le fluide est appliqué à chaque fois au côté frontal de la crémaillère, et qu'il est prévu un système de commande qui pilote le déplacement en coulissement de la crémaillère par l'intermédiaire de la chambre.

15. Dispositif de levage orientable selon une ou plusieurs des revendications précédentes, caractérisé par le fait que, dans la région de l'extrémité du dispositif formant piston, le dispositif de torsion est réalisé sous la forme d'un profilé plein pourvu d'un perçage qui sert d'entrée ou, respectivement, de sortie à la deuxième chambre.

16. Dispositif de levage orientable selon une ou plusieurs des revendications précédentes, caractérisé par le fait que, dans la région de l'extrémité du dispositif formant piston, le dispositif de torsion est réalisé sous la forme d'un profilé creux.

17. Dispositif de levage orientable selon la revendication 2, caractérisé par le fait que les éléments constitutifs d'accouplement sont réalisés sous la forme de profilés en moyeux, et en particulier de développantes ou similaires.
